(19) 

**Europäisches Patentamt**
**European Patent Office**
**Office européen des brevets**

(11) **EP 4 663 694 A1**

(12) **EUROPEAN PATENT APPLICATION**

(43) Date of publication:
17.12.2025 Bulletin 2025/51

(21) Application number: 24181325.2

(22) Date of filing: 11.06.2024

(51) International Patent Classification (IPC):
*C08K 3/04* (2006.01)   *C08L 23/08* (2025.01)

(52) Cooperative Patent Classification (CPC):
(C-Sets available)
**C08K 3/04; H01M 4/625;** C08K 2201/001;
C08K 2201/005; C08K 2201/006; C08K 2201/014
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: SHPP Global Technologies B.V.
4612 PX Bergen op Zoom (NL)

(72) Inventor: SILVI, Norberto
Selkirk, 12158 (US)

(74) Representative: Modiano, Gabriella Diana
Modiano & Partners SA
Steinsdorfstraße 14
80538 München (DE)

(54) **ELECTRICALLY CONDUCTIVE POLYETHYLENE COMPOUNDS HAVING IMPROVED PROPERTIES**

(57) Thermoplastic compositions include: from about 35 wt% to about 70 wt% of at least one polyethylene polymer; from about 25 wt% to about 45 wt% of at least one graphite filler; and from greater than 15 wt% to about 25 wt% of at least one carbon powder filler having a BET surface area of at most 600 square meters per gram ($m^2/g$) as determined in accordance with ASTM D3037, an oil absorption number (OAN) of at most 300 ml/100g as determined in accordance with ASTM D2414, and an iodine absorption of at most 600 mg/g as determined in accordance with ASTM D1510. The composition has a volume electrical resistivity of at most 1.65 ohm.centimeter (ohm.cm), and a capillary melt viscosity of at most 3300 Pascal-seconds (Pa.s) at a temperature of 280 °C and a shear rate of 100 reciprocal seconds (1/s).

FIG. 1

**(Cont. next page)**

EP 4 663 694 A1

(52) Cooperative Patent Classification (CPC): (Cont.)

C-Sets
**C08K 3/04, C08L 23/0815**

## Description

### FIELD OF THE DISCLOSURE

The present disclosure relates to thermoplastic compositions including polyethylene polymer, graphite filler, and carbon powder that have improved volume electrical resistivity and capillary melt viscosity properties.

### BACKGROUND OF THE DISCLOSURE

The search for carbon-plastic electrode composites to use as electrode plates in zinc bromide batteries started in the late 1970s. U.S. Patent 4,169,816 ("816 Patent"), for example, describes a homogeneous blend of a crystalline polypropylene-ethylene (EP) copolymer, an electrically conductive carbon black, a small quantity of silica, and a fiber-reinforcing agent selected from carbon fibers and mixtures of carbon and glass fibers. The composition was reported to have excellent strength, good extrudability, excellent volume resistivity (1 Ohm.cm), and good impermeability.

The 816 Patent provides that to impart electrical conductivity, the composition should contain at least 15 parts by weight of a finely divided conductive carbon powder per hundred parts (pph) of the copolymer. Further, more than 35 pph of the conductive carbon results in a composition that is too brittle and also less easily extrudable into thin nonporous sheets. Additionally, increasing the amount of carbon to about 35 pph tends to increase the permeability of the thin sheets manufactured from such compositions to liquids such as bromine. It is preferred that the finely divided conductive carbon black has a surface area greater than about 500 $m^2/g$, such as those manufactured under the trade name Ketjenblack EC.

Johnson Controls began research into plastic-carbon electrodes in the 1990s, reporting that the polypropylene-ethylene copolymer-based electrodes such as those described in the 816 Patent were susceptible to oxidative attack, swelling and warpage. They explained that the mechanism behind the bromide attack was the vulnerability of tertiary hydrogens in the backbone of the propylene chain. To circumvent this problem Johnson Controls selected high density polyethylene (HDPE) homopolymer, which eliminates most, if not all, tertiary hydrogens on the backbone chain. Johnson Controls reported positive results in aging studies with the base polymer substitution; HDPE was improved as compared to the EP Copolymer.

Globe-Union Inc. (a Johnson Controls subsidiary) patented their HDPE-based carbon-plastic electrodes in December 1992. U.S. Patent 5,173,362 ("362 Patent") described compositions for electrode systems, particularly those to be used for bipolar electrodes in zinc-bromine batteries. These compositions preferably included carbon black as a conductive filler in a polymeric matrix, with reinforcing materials such as glass fibers. The warpage of the zinc-bromine electrodes experienced in the prior art, and which was believed to be caused by physical expansion of the electrodes due to bromine absorption by the material of the electrode, was substantially eliminated in the compositions and fabrication processes described in the 362 Patent. In this patent, materials were prepared using a lamination process, known as glass-mat reinforced thermoplastics technology. Alternatively, the substrate was formed using a slurry process. Bromination, unlike chlorination, is extremely selective to the chemistry of the polymer matrix used, and the tertiary hydrogens of polypropylene systems react approximately 20k times faster with bromine than the secondary hydrogens in polyethylene. Three carbon blacks were used in the compositions of the 362 Patent, but the Ketjenblack EC 300J grade offered the best combination of electrical conductivity and processability properties for the amount of carbon used. The 362 Patent describes wide ranges of 5-40 wt% and 10-70 wt%, respectively, for carbon black and fiber loading. However, it is likely that a carbon loading of 18 wt% as described in the examples of the 362 Patent are preferred; these are the same loadings preferred in the 816 Patent.

SABIC's PCT Publication WO2022/195511 ("511 Publication") described highly filled plastic materials suitable to replace titanium in electrode plates of zinc bromide batteries. These materials included at least one polyethylene and a mixture of synthetic graphite and conductive carbon black added in different ratios. These compositions have good electrical conductivity, chemical resistance, and processability into thin plastic sheets using conventional polymer processing methods. The polymers used in the 511 Publication were ethylene-hexene copolymers of medium to high density having good chemical resistance and melt flow, and a degree of crystallinity of at least 45%. Synthetic, high purity graphites and carbon black powders of different particle sizes were used as fillers to impart electrical conductivity to the compositions. These PE-graphite-carbon compositions were injection molded into plaques, and also extruded into sheets of different thicknesses, which were used successfully to manufacture electrode plates for zinc-bromide batteries. Different polyethylenes, graphites and carbon powders were used, but only specific grades and levels of these materials were found to be compatible with the desired properties and applications described therein.

In the 511 Publication it was found that the choice of polymer matrix affected the resistance of the composite material to the electrolyte solution used in the redox battery, with low density polyethylenes showing, in general, a poor response to the environmental conditions encountered by the electrode plate material inside the battery. It was found that copolymers of high-density polyethylene and hexene of at least 45% crystallinity had excellent resistance to zinc bromide at the relatively high operating temperatures of the battery. The graphites used in the compositions of the 511 Publication are highly crystalline materials of high purity, which are produced at ultra-high temperatures that vaporize impurities such as metal oxides, sulfur, iron, aluminum, and many others to render 99%+ pure carbon synthetic graphite in particle sizes from less than 1 micron to several hundreds of microns. The carbon blacks used in these compounds have a primary/basic particle size of some 10-50 nm, with aggregates of several hundreds of nanometers in size, and agglomerates as large as 100-200 microns.

While the compositions described above are suitable for certain applications, they may not demonstrate the balance of volume electrical resistivity, impact strength, chemical resistance in zinc bromide electrolyte at elevated temperatures, and processability required to manufacture thin sheets for battery electrode plates using a conventional sheet extrusion process.

These and other shortcomings are addressed by aspects of the present disclosure.

## SUMMARY

Aspects of the disclosure relate to thermoplastic compositions including: from about 35 wt% to about 70 wt% of at least one polyethylene polymer; from about 25 wt% to about 45 wt% of at least one graphite filler; and from greater than 15 wt% to about 25 wt% of at least one carbon powder filler having a BET surface area of at most 600 square meters per gram ($m^2$/g) as determined in accordance with ASTM D3037, an oil absorption number (OAN) of at most 300 ml/100g as determined in accordance with ASTM D2414, and an iodine absorption of at most 600 mg/g as determined in accordance with ASTM D1510. The composition has a volume electrical resistivity of at most 1.65 ohm.centimeter (ohm.cm) as determined in accordance with ASTM D991. The composition has a capillary melt viscosity of at most 3300 Pascal-seconds (Pa.s) at a temperature of 280 °C and a shear rate of 100 reciprocal seconds (1/s) as evaluated using a GEP multi-point method and Kayeness viscometer. The combined weight percent value of all components does not exceed 100 wt%, and all weight percent values are based on the total weight of the composition.

## BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

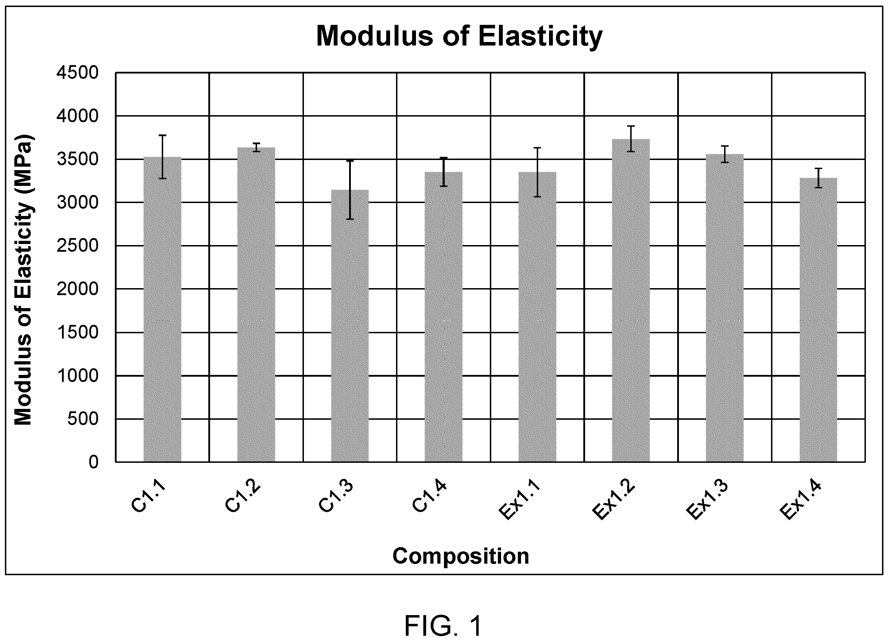

FIG. 1 is a graph showing modulus of elasticity properties of comparative and example compositions according to aspects of the disclosure.

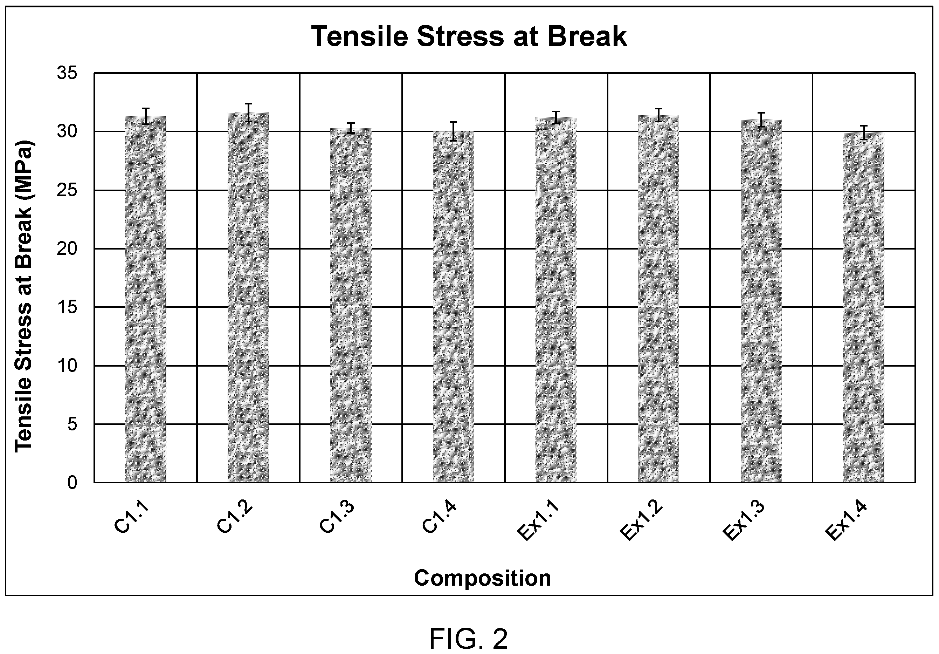

FIG. 2 is a graph showing tensile stress at break properties of comparative and example compositions according to aspects of the disclosure.

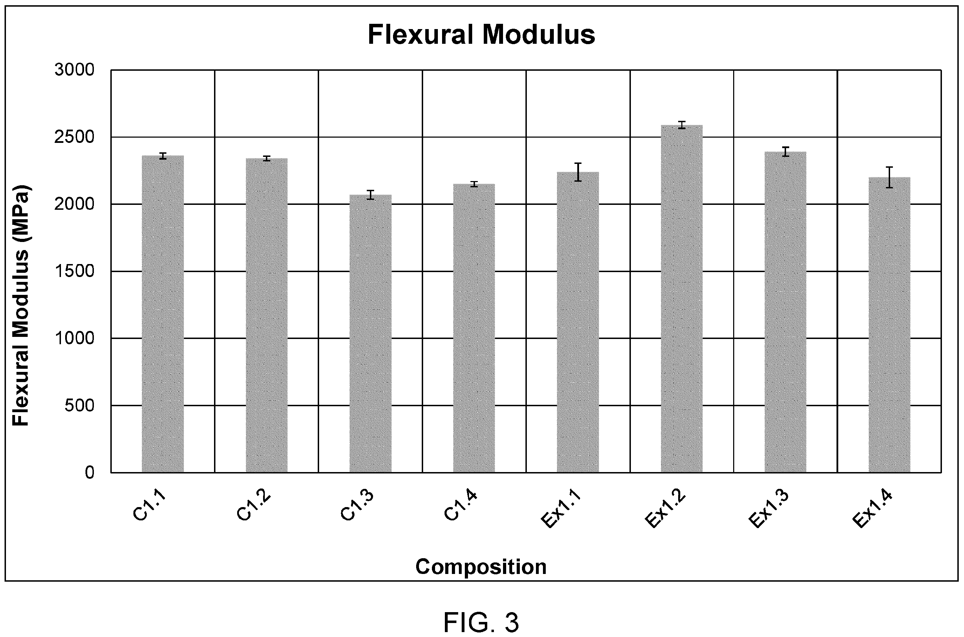

FIG. 3 is a graph showing flexural modulus properties of comparative and example compositions according to aspects of the disclosure.

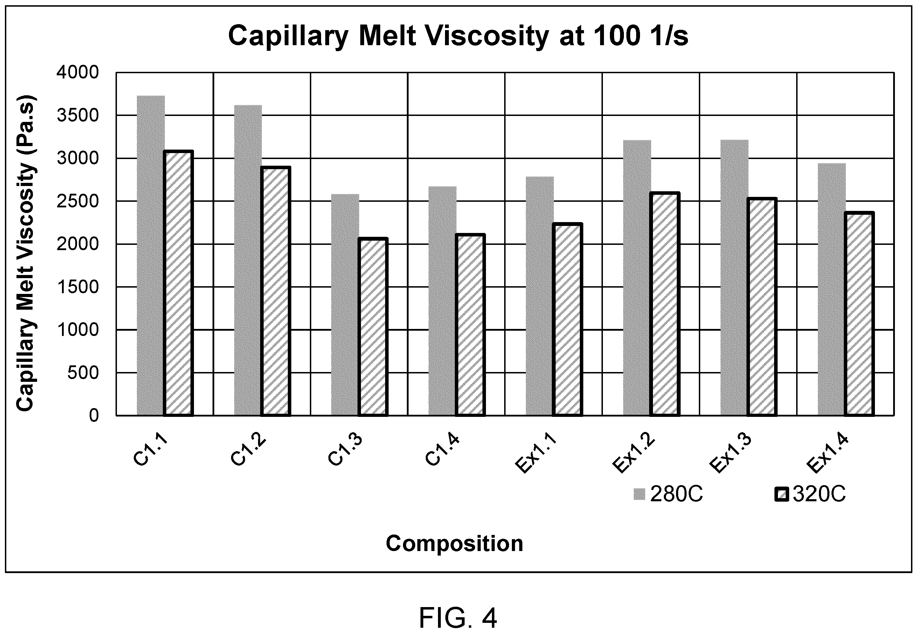

FIG. 4 is a graph showing capillary melt viscosity properties of comparative and example compositions at 280 °C and 320 °C according to aspects of the disclosure.

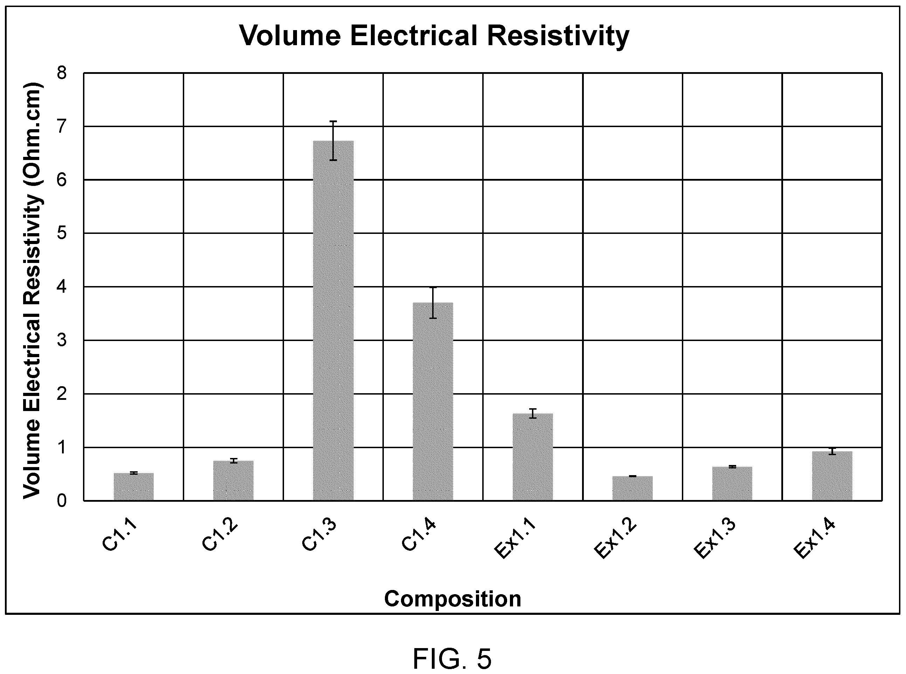

FIG. 5 is a graph showing volume electrical resistivity properties of comparative and example compositions according to aspects of the disclosure.

## DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

**Definitions**

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polyethylene polymer" includes mixtures of two or more polyethylene polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i M_i{}^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**Thermoplastic Compositions**

Aspects of the disclosure relate to a thermoplastic composition including: from about 35 wt% to about 70 wt% of at least one polyethylene polymer; from about 25 wt% to about 45 wt% of at least one graphite filler; and from greater than 15 wt% to about 25 wt% of at least one carbon powder filler having a BET surface area of at most 600 square meters per gram ($m^2$/g) as determined in accordance with ASTM D3037, an oil absorption number (OAN) of at most 300 ml/100g as determined in accordance with ASTM D2414, and an iodine absorption of at most 600 mg/g as determined in accordance with ASTM D1510. The composition has a volume electrical resistivity of at most 1.65 ohm.centimeter (ohm.cm) as determined in accordance with ASTM D991. The composition has a capillary melt viscosity of at most 3300 Pascal-seconds (Pa.s) at a temperature of 280 °C and a shear rate of 100 reciprocal seconds (1/s) as evaluated using a GEP multi-point method and Kayeness viscometer. The combined weight percent value of all components does not exceed 100 wt%, and all weight percent values are based on the total weight of the composition.

The polyethylene polymer may be a polyethylene homopolymer or copolymer. In some aspects the polyethylene polymer includes a copolymer including ethylene monomer and hexene monomer. Combinations of polyethylene polymers and/or copolymers may also be used. An example of a suitable polyethylene polymer is Formolene® HL5010, available from Formosa Plastics. In other aspects the polyethylene polymer includes a copolymer. In certain aspects the polyethylene polymer has a degree of crystallinity of at least 48% as determined by differential scanning calorimetry (DSC). In further aspects the polyethylene polymer has a degree of crystallinity of from 48% to 95% as determined by differential scanning calorimetry (DSC). In specific aspects the polyethylene polymer has a degree of crystallinity of at least 49%, or at least 50%, or at least 51%, or at least 52%, or at least 53%, or at least 54%, or at least 55%, or at least 56%, or at least 57%, or at least 58%, or at least 59%, or at least 60%, or at least 61%, or about 61.5%, or at most 95%, or at most 90%, or at most 85%, or at most 80%, or at most 75%, or at most 70%, or at most 65%, as determined by DSC.

In certain aspects the polyethylene polymer has a density of at least 0.92 gram per cubic centimeter (g/cm$^3$) as determined in accordance with ASTM D1505. In other aspects the polyethylene polymer has a density of at least 0.922 g/cm$^3$, or at least 0.924 g/cm$^3$, or at least 0.926 g/cm$^3$, or at least 0.928 g/cm$^3$, or at least 0.930 g/cm$^3$, or at least 0.932 g/cm$^3$, or at least 0.934 g/cm$^3$, or at least 0.936 g/cm$^3$, or at least 0.938 g/cm$^3$, or at least 0.940 g/cm$^3$, or at least 0.942 g/cm$^3$, or at least 0.944 g/cm$^3$, or at least 0.946 g/cm$^3$, or at least 0.948 g/cm$^3$, or at most 0.99 g/cm$^3$, or at most 0.985 g/cm$^3$, or at most 0.98 g/cm$^3$, or at most 0.975 g/cm$^3$, or at most 0.97 g/cm$^3$, or at most 0.965 g/cm$^3$, or at most 0.96 g/cm$^3$, or at most 0.955 g/cm$^3$, or at most 0.95 g/cm$^3$, as determined in accordance with ASTM D1505

In further aspects the polyethylene polymer has a melt flow rate (MFR) of at least 5 grams per 10 minutes (g/10min) as measured at 190 °C and 21.6 kilogram (kg) in accordance with ASTM D1238. In particular aspects the polyethylene polymer has a MFR of at least 5.5 g/10min, or at least 6 g/10 min, or at least 6.5 g/10 min, or at least 7 g/10 min, or at least 7.5 g/10 min, or at least 8 g/10 min, or at least 8.5 g/10 min, or at least 9 g/10 min, or at least 9.5 g/10 min, or at least 10 g/10 min, or about 10 g/10 min or at most 30 g/10 min, or at most 29 g/10 min, or at most 28 g/10 min, or at most 27 g/10 min, or at most 26 g/10 min, or at most 25 g/10 min, or at most 24 g/10 min, or at most 23 g/10 min, or at most 22 g/10 min, or at most 21 g/10 min, or at most 20 g/10 min, or at most 19 g/10 min, or at most 18 g/10 min, or at most 17 g/10 min, or at most 16 g/10 min, or at most 15 g/10 min, or at most 14 g/10 min, or at most 13 g/10 min, or at most 12 g/10 min, or at most 11 g/10 min, as measured at 190 °C and 21.6 kg in accordance with ASTM D1238.

Compositions according to aspects of the disclosure include about 35 wt% to about 70 wt% of the at least one polyethylene polymer. In other aspects the composition includes at least 35 wt%, or at least 40 wt%, or at least 45 wt%, or at least 50 wt%, or at least 52 wt%, or at most 70 wt%, or at most 65 wt%, or at most 60 wt%, or at most 58 wt%, or at most 55 wt%, of the at least one polyethylene polymer.

The graphite filler may in some aspects be a synthetic graphite. Exemplary graphite filler includes, but is not limited to, TIMREX® KS44, available from Imerys.

In some aspects the graphite filler has a D50 particle size of at least 5 micron ($\mu$m) as determined by laser diffraction. In other aspects the graphite filler has a D50 particle size of from 5-300 $\mu$m, or at least 5 $\mu$m, or at least 6 $\mu$m, or at least 7 $\mu$m, or at least 8 $\mu$m, or at least 9 $\mu$m, or at least 10 $\mu$m, or at least 11 $\mu$m, or at least 12 $\mu$m, or at least 13 $\mu$m, or at least 14 $\mu$m, or at least 15 $\mu$m, or at most 300 $\mu$m, or at most 275 $\mu$m, or at most 250 $\mu$m, or at most 225 $\mu$m, or at most 200 $\mu$m, or at most 175 $\mu$m, or at most 150 $\mu$m, or at most 125 $\mu$m, or at most 100 $\mu$m, or at most 90 $\mu$m, or at most 80 $\mu$m, or at most 70 $\mu$m, or at most 60 $\mu$m, or at most 50 $\mu$m, or at most 40 $\mu$m, or at most 30 $\mu$m, or at most 20 $\mu$m, as determined by laser diffraction.

In further aspects the graphite filler has a Brunauer-Emmett-Teller (BET) surface area of at least 5 square meters per gram (m$^2$/g) as determined in accordance with ASTM D3037. In particular aspects the graphite filler has a BET surface area of from 5-50 m$^2$/g, or at least 5.5 m$^2$/g, or at least 6 m$^2$/g, or at least 6.5 m$^2$/g, or at least 7 m$^2$/g, or at least 7.5 m$^2$/g, or at least 8 m$^2$/g, or at least 8.5 m$^2$/g, or at least 9 m$^2$/g, or at most 50 m$^2$/g, or at most 45 m$^2$/g, or at most 40 m$^2$/g, or at most 35 m$^2$/g, or at most 30 m$^2$/g, or at most 25 m$^2$/g, or at most 24 m$^2$/g, or at most 23 m$^2$/g, or at most 22 m$^2$/g, or at most 21 m$^2$/g, or at most 20 m$^2$/g, or at most 19 m$^2$/g, or at most 18 m$^2$/g, or at most 17 m$^2$/g, or at most 16 m$^2$/g, or at most 15 m$^2$/g, or at most 14 m$^2$/g, or at most 13 m$^2$/g, or at most 12 m$^2$/g, or at most 11 m$^2$/g, or at most 10 m$^2$/g, as determined in accordance with ASTM D3037.

Thermoplastic compositions according to aspects of the disclosure include from about 25 wt% to about 45 wt% of at least one graphite filler. In some aspects the composition includes at least 25 wt%, or at least 26 wt%, or at least 27 wt%, or at least 28 wt%, or at least 29 wt%, or at most 45 wt%, or at most 44 wt%, or at most 43 wt%, or at most 42 wt%, or at most 41 wt%, or at most 40 wt%, or at most 39 wt%, or at most 38 wt%, or at most 37 wt%, or at most 36 wt%, or at most 35 wt%, or at most 34 wt%, or at most 33 wt%, or at most 32 wt%, or at most 31 wt%, or at most 30 wt%, of the at least one graphite filler.

In some aspects the at least one carbon powder filler has a BET surface area of at most 600 square meters per gram (m$^2$/g) as determined in accordance with ASTM D3037. In other aspects the at least one carbon powder filler has a BET surface area of from 25-600 m$^2$/g, or at least 25 m$^2$/g, or at least 30 m$^2$/g, or at least 35 m$^2$/g, or at least 40 m$^2$/g, or at least 45 m$^2$/g, or at least 50 m$^2$/g, or at least 55 m$^2$/g, or at least 60 m$^2$/g, or at least 65 m$^2$/g, or at most 600 m$^2$/g, or at most 550 m$^2$/g, or at most 500 m$^2$/g, or at most 450 m$^2$/g, or at most 400 m$^2$/g, or at most 350 m$^2$/g, or at most 300 m$^2$/g, or at most 250 m$^2$/g, or at most 200 m$^2$/g, or at most 175 m$^2$/g, or at most 150 m$^2$/g, or at most 125 m$^2$/g, or at most 100 m$^2$/g, or at most

90 m$^2$/g, or at most 80 m$^2$/g, or at most 70 m$^2$/g, as determined in accordance with ASTM D3037. In a specific aspect the at least one carbon powder filler has a BET surface area of from 25 to 100 m$^2$/g as determined in accordance with ASTM D3037.

In certain aspects the at least one carbon powder filler has an OAN of at most 300 ml/100g as determined in accordance with ASTM D2414. In further aspects the at least one carbon powder filler has an OAN of from 100-300 ml/100g, or at least 100 ml/100g, or at least 110 ml/100g, or at least 120 ml/100g, or at least 130 ml/100g, or at least 140 ml/100g, or at least 150 ml/100g, or at least 160 ml/100g, or at least 170 ml/100g, or at least 180 ml/100g, or at least 190 ml/100g, or at most 300 ml/100g, or at most 290 ml/100g, or at most 280 ml/100g, or at most 270 ml/100g, or at most 260 ml/100g, or at most 250 ml/100g, or at most 240 ml/100g, or at most 230 ml/100g, or at most 220 ml/100g, or at most 210 ml/100g, or at most 200 ml/100g, as determined in accordance with ASTM D2414.

In specific aspects the at least one carbon powder filler has an iodine absorption of at most 600 mg/g as determined in accordance with ASTM D1510. In particular aspects the at least one carbon powder filler has an iodine absorption of from 20-600 mg/g, or at least 20 mg/g, or at least 25 mg/g, or at least 30 mg/g, or at least 35 mg/g, or at least 40 mg/g, or at least 45 mg/g, or at least 50 mg/g, or at least 55 mg/g, or at least 60 mg/g, or at least 65 mg/g, or at least 70 mg/g, or at least 75 mg/g, or at least 80 mg/g, or at most 600 mg/g, or at most 550 mg/g, or at most 500 mg/g, or at most 450 mg/g, or at most 400 mg/g, or at most 350 mg/g, or at most 300 mg/g, or at most 250 mg/g, or at most 200 mg/g, or at most 150 mg/g, or at most 100 mg/g, or at most 90 mg/g, as determined in accordance with ASTM D1510.

In particular aspects the composition includes from greater than 15 wt% to about 22 wt% of the at least one carbon powder filler. In other aspects the composition includes at least 15.1 wt%, or at least 15.2 wt%, or at least 15.3 wt%, or at least 15.4 wt%, or at least 15.5 wt%, or at least 15.6 wt%, or at least 15.7 wt%, or at least 15.8 wt%, or at least 15.9 wt%, or at least 16 wt%, or at least 16.5 wt%, or at least 17 wt%, or at least 17.5 wt%, or at least 18 wt%, or at least 18.5 wt%, or at least 19 wt%, or at most 22 wt%, or at most 21.5 wt%, or at most 21 wt%, or at most 20.5 wt%, or at most 20 wt%, or at most 19.5 wt%, of the at least one carbon powder filler.

An exemplary carbon powder filler suitable for use in aspects of the disclosure includes, but is not limited to, Ensaco® 250G, available from Imerys.

In certain aspects the composition does not include a polymer component other than the at least one polyethylene polymer. In some aspects the composition includes at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1 wt%, or at most 0.5 wt%, or at most 0.4 wt%, or at most 0.3 wt%, or at most 0.2 wt%, or at most 0.1 wt%, of a polymer component other than the at least one polyethylene polymer. In particular aspects the composition does not include polypropylene or a styrenated copolymer. In specific aspects the composition includes at most 10 wt%, or at most 9 wt%, or at most 8 wt%, or at most 7 wt%, or at most 6 wt%, or at most 5 wt%, or at most 4 wt%, or at most 3 wt%, or at most 2 wt%, or at most 1 wt%, or at most 0.5 wt%, or at most 0.4 wt%, or at most 0.3 wt%, or at most 0.2 wt%, or at most 0.1 wt%, of a polypropylene or a styrenated copolymer. As explained above, such compositions may lack desired properties-including but not limited to volume electrical resistivity and capillary melt viscosity-as compared to compositions according to aspects of the disclosure.

The compositions described herein may include at least one additional additive in some aspects. The at least one additional additive may include, but is not limited to, an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof. In certain aspects the composition includes from 0.001 wt% to 10 wt%, or at least 0.001 wt%, or at least 0.01 wt%, or at least 0.1 wt%, or at least 0.5 wt%, or at least 1 wt%, or at least 1.5 wt%, or at least 2 wt%, or at least 2.5 wt%, or at least 3 wt%, or at least 3.5 wt%, or at least 4 wt%, or at least 4.5 wt%, or at least 5 wt%, or at most 10 wt%, or at most 9.5 wt%, or at most 9 wt%, or at most 8.5 wt%, or at most 8 wt%, or at most 7.5 wt%, or at most 7 wt%, or at most 6.5 wt%, or at most 6 wt%, or at most 5.5 wt%, or at most 5 wt%, or at most 4.5 wt%, or at most 4 wt%, or at most 3.5 wt%, or at most 3 wt%, or at most 2.5 wt%, or at most 2 wt%, or at most 1.5 wt%, or at most 1 wt%, of the at least one additional additive.

**Properties of Thermoplastic Compositions**

Thermoplastic compositions according to aspects of the disclosure have volume electrical resistivity of at most 1.65 ohm.centimeter (ohm.cm) as determined in accordance with ASTM D991. In further aspects the composition has a volume electrical resistivity of from 0.01-1.65 ohm.cm, or at least 0.01 ohm.cm, or at least 0.1 ohm.cm, or at least 0.15 ohm.cm, or at least 0.2 ohm.cm, or at least 0.25 ohm.cm, or at least 0.3 ohm.cm, or at least 0.35 ohm.cm, or at least 0.4 ohm.cm, or at least 0.45 ohm.cm, or at least 0.5 ohm.cm, or at least 0.55 ohm.cm, or at least 0.6 ohm.cm, or at least 0.65 ohm.cm, or at least 0.7 ohm.cm, or at least 0.75 ohm.cm, or at least 0.8 ohm.cm, or at least 0.85 ohm.cm, or at least 0.9 ohm.cm, or at least 0.95 ohm.cm, or at least 1.0 ohm.cm, or at most 1.65 ohm.cm, or at most 1.6 ohm.cm, or at most 1.55 ohm.cm, or at most 1.5 ohm.cm, or at most 1.45 ohm.cm, or at most 1.4 ohm.cm, or at most 1.35 ohm.cm, or at most 1.3 ohm.cm, or at most 1.25 ohm.cm, or at most 1.2 ohm.cm, or at most 1.15 ohm.cm, or at most 1.1 ohm.cm, or at most 1.05 ohm.cm, or at most 1.0 ohm.cm, or at most 0.95 ohm.cm, or at most 0.9 ohm.cm, or at most 0.85 ohm.cm, or at most 0.8 ohm.cm, or at most 0.75 ohm.cm, or at most 0.7 ohm.cm, or at most 0.65 ohm.cm, or at most 0.6 ohm.cm, or at most 0.55 ohm.cm, or at most 0.5 ohm.cm, as determined in accordance with ASTM D991.

Compositions according to aspects of the disclosure have a capillary melt viscosity of at most 3300 Pascal-seconds (Pa.s) at a temperature of 280 °C and a shear rate of 100 reciprocal seconds (1/s) as evaluated using a GEP multi-point method and Kayeness viscometer. In further aspects the composition has a capillary melt viscosity of from 2700-3300 Pa.s, or at least 2700 Pa.s, or at least 2750 Pa.s, or at least 2800 Pa.s, or at least 2850 Pa.s, or at least 2900 Pa.s, or at least 2950 Pa.s, or at least 3000 Pa.s, or at most 3300 Pa.s, or at most 3250 Pa.s, or at most 3200 Pa.s, or at most 3150 Pa.s, or at most 3100 Pa.s, or at most 3050 Pa.s, or at most 3000 Pa.s, or at most 2950 Pa.s, or at most 2900 Pa.s, or at most 2850 Pa.s, or at most 2800 Pa.s, at a temperature of 280 °C and a shear rate of 100 reciprocal seconds (1/s) as evaluated using a GEP multi-point method and Kayeness viscometer.

In certain aspects the composition has a capillary melt viscosity of at most 2600 Pa.s at a temperature of 320 °C and a shear rate of 100 1/s as evaluated using a GEP multi-point method and Kayeness viscometer. In specific aspects the composition has a capillary melt viscosity of from 2000-2600 Pa.s, or at least 2000 Pa.s, or at least 2050 Pa.s, or at least 2100 Pa.s, or at least 2150 Pa.s, or at least 2200 Pa.s, or at least 2250 Pa.s, or at least 2300 Pa.s, or at least 2350 Pa.s, or at least 2400 Pa.s, or at least 2450 Pa.s, or at least 2500 Pa.s, or at most 2600 Pa.s, or at most 2550 Pa.s, or at most 2500 Pa.s, or at most 2450 Pa.s, or at most 2400 Pa.s, or at most 2350 Pa.s, or at most 2300 Pa.s, or at most 2250 Pa.s, at a temperature of 320 °C and a shear rate of 100 1/s as evaluated using a GEP multi-point method and Kayeness viscometer.

Compositions according to aspects of the disclosure may have a tensile modulus of elasticity of at least 2900 MPa as evaluated according to ASTM D638 with an extensometer, a uniaxial tensile test, and a test speed of 5 millimeters per minute (mm/min). In some aspects the composition has a tensile modulus of elasticity of from 2900-4000 MPa, or at least 2900 MPa, or at least 3000 MPa, or at least 3100 MPa, or at least 3200 MPa, or at least 3300 MPa, or at least 3400 MPa, or at least 3500 MPa, or at least 3600 MPa, or at least 3700 MPa, or at most 4000 MPa, or at most 3900 MPa, or at most 3800 MPa, or at most 3700 MPa, or at most 3600 MPa, or at most 3500 MPa, or at most 3400 MPa, or at most 3300 MPa, as evaluated according to ASTM D638 with an extensometer, a uniaxial tensile test, and a test speed of 5 mm/min.

In certain aspects the composition has a flexural modulus of at least 1800 MPa as evaluated using a 3-point flexural test in accordance with ASTM D790. In further aspects the composition has a flexural modulus of from 1800-3000 MPa, or at least 1800 MPa, or at least 1825 MPa, or at least 1850 MPa, or at least 1875 MPa, or at least 1900 MPa, or at least 1925 MPa, or at least 1950 MPa, or at least 1975 MPa, or at least 2000 MPa, or at least 2050 MPa, or at least 2100 MPa, or at least 2150 MPa, or at least 2200 MPa, or at least 2250 MPa, or at least 2300 MPa, or at least 2350 MPa, or at least 2400 MPa, or at least 2450 MPa, or at least 2500 MPa, or at least 2550 MPa, or at most 3000 MPa, or at most 2900 MPa, or at most 2800 MPa, or at most 2700 MPa, or at most 2600 MPa, as evaluated using a 3-point flexural test in accordance with ASTM D790.

It was found through experimentation that the choice of polymer matrix affected the chemical resistance of the composition to the electrolyte solution used in a non-flow Redox battery, with low density polyethylenes showing, in general, a poor response to the environmental conditions encountered by the electrode plate material inside the battery. It was found that polyethylene polymers, and in particular copolymers of high density polyethylene and hexene of at least 48% crystallinity showed excellent resistance to zinc bromide at the operating temperatures of the battery. The graphite used in the example compositions, TIMREX® KS44, is a highly crystalline material of high purity, which is produced at ultra-high temperatures that vaporize impurities such as metal oxides, sulfur, iron, aluminum and many others to render a greater than 99% pure carbon synthetic graphite of different particle size.

Accordingly, in some aspects the composition has improved chemical resistance against zinc bromide corrosion as compared to a comparative composition that includes a polyethylene polymer having a degree of crystallinity of less than 48% instead of the polyethylene polymer having a degree of crystallinity of at least 48%. Bromine is highly corrosive and can break the carbon-carbon bonds of the polymer, generating acid groups that lower the pH of the electrolyte making it more acidic, and therefore more corrosive. As explained in the 362 Patent (referenced above), it was found that the secondary hydrogens in HDPE were much more resistive to bromination than the tertiary hydrogens of polypropylene (362 Patent, col. 2, line 56-col. 3 line 2). Specifically, the '362 Patent found that the DMDA 6147 HDPE had suitable chemical resistance against zinc bromide corrosion. Accordingly, HDPE having the degree of crystallinity and/or density properties described herein were selected for use in the compositions of the disclosure. The Formolene HDPE has sufficient density and degree of crystallinity to be suitable for use in aspects of the disclosure. It is assumed that polyethylene polymers having a lower density and/or degree of crystallinity properties would have poor chemical resistance against bromination, making it unsuitable for use in applications such as zinc-bromide battery electrode plates. Accordingly, polyethylenes having a higher density and/or degree of crystallinity are more suitable for compositions according to aspects of the disclosure.

## Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

## Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding, compression molding, and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded. In particular aspects the article is a battery electrode plate. Battery electrode plates that have a thickness of 1 millimeter (mm) or less may be formed from compositions according to aspects of the disclosure.

Various combinations of elements of this disclosure are encompassed by this disclosure, e.g., combinations of elements from dependent claims that depend upon the same independent claim.

## Aspects of the Disclosure

In various aspects, the present disclosure pertains to and includes at least the following aspects.

Aspect 1. A thermoplastic composition comprising:

from about 35 wt% to about 70 wt% of at least one polyethylene polymer;
from about 25 wt% to about 45 wt% of at least one graphite filler; and
from greater than 15 wt% to about 25 wt% of at least one carbon powder filler having a BET surface area of at most 600 square meters per gram (m$^2$/g) as determined in accordance with ASTM D3037, an oil absorption number (OAN) of at most 300 ml/100g as determined in accordance with ASTM D2414, and an iodine absorption of at most 600 mg/g as determined in accordance with ASTM D1510,
wherein the composition has a volume electrical resistivity of at most 1.65 ohm.centimeter (ohm.cm) as determined in accordance with ASTM D991,
wherein the composition has a capillary melt viscosity of at most 3300 Pascal-seconds (Pa.s) at a temperature of 280 °C and a shear rate of 100 reciprocal seconds (1/s) as evaluated using a GEP multi-point method and Kayeness viscometer, and

wherein the combined weight percent value of all components does not exceed 100 wt%, and all weight percent values are based on the total weight of the composition.

Aspect 2. The thermoplastic composition according to Aspect 1, wherein the polyethylene polymer has a density of at least 0.92 gram per cubic centimeter ($g/cm^3$) as determined in accordance with ASTM D1505 and a melt flow rate (MFR) of at least 5 grams per 10 minutes (g/10min) as measured at 190 °C and 21.6 kilogram (kg) in accordance with ASTM D1238.

Aspect 3. The thermoplastic composition according to Aspects 1 or 2, wherein the polyethylene polymer has a degree of crystallinity of at least 48% as determined by differential scanning calorimetry (DSC).

Aspect 4. The thermoplastic composition according to Aspect 3, wherein the composition has improved chemical resistance against zinc bromide corrosion as compared to a comparative composition that includes a polyethylene polymer having a degree of crystallinity of less than 48% instead of the polyethylene polymer having a degree of crystallinity of at least 48%.

Aspect 5. The thermoplastic composition according to any of Aspects 1 to 4, wherein the graphite filler has a D50 particle size of at least 5 micron ($\mu$m) as determined by laser diffraction and a BET surface area of at least 5 square meters per gram ($m^2/g$) as determined in accordance with ASTM D3037.

Aspect 6. The thermoplastic composition according to any of Aspects 1 to 5, wherein the composition comprises from about 16 wt% to about 22 wt% of the at least one carbon powder filler.

Aspect 7. The thermoplastic composition according to any of Aspects to 1 to 6, wherein the composition does not comprise a polymer component other than the at least one polyethylene polymer.

Aspect 8. The thermoplastic composition according to any of Aspects 1 to 7, wherein the composition does not comprise polypropylene or a styrenated copolymer.

Aspect 9. The thermoplastic composition according to any of Aspects 1 to 8, wherein the composition comprises at least one additional additive.

Aspect 10. The thermoplastic composition according to Aspect 9, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

Aspect 11. The thermoplastic composition according to any of Aspects 1 to 10, wherein the composition has a capillary melt viscosity of at most 2600 Pa.s at a temperature of 320 °C and a shear rate of 100 1/s as evaluated using a GEP multi-point method and Kayeness viscometer.

Aspect 12. The thermoplastic composition according to any of Aspects 1 to 11, wherein the composition has a tensile modulus of elasticity of at least 2900 MPa as evaluated according to ASTM D638 with an extensometer, a uniaxial tensile test, and a test speed of 5 millimeters per minute (mm/min).

Aspect 13. The thermoplastic composition according to any of Aspects 1 to 12, wherein the composition has a flexural modulus of at least 1800 MPa as evaluated using a 3-point flexural test in accordance with ASTM D790.

Aspect 14. The thermoplastic composition according to any of Aspects 1 to 13, wherein the at least one carbon powder filler has a BET surface area of from 25 to 100 $m^2/g$ as determined in accordance with ASTM D3037.

Aspect 15. An article comprising the thermoplastic composition according to any of Aspects 1 to 14.

Aspect 16. The article according to Aspect 15, wherein the article is a battery electrode plate.

Aspect 17. The article according to Aspect 16, wherein the battery electrode plate has a thickness of 1 millimeter (mm) or less.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions prepared and tested as described herein included the components listed in Table 1:

**Table 1 - PE Copolymer and Graphite**

| Component | Description | Properties |
|---|---|---|
| Formolene® HL5010 | Extra high MW PE/hexene copolymer | Density: 0.949 g/cm$^3$ (ASTM D1505) |
| | | MFR: 10 g/10min (190 °C /21.60 kg, ASTM D1238) |
| | | ESCR in 100% Igepal: > 600 hour (ASTM D1693) |
| | | Degree of crystallization 61.5% (by DSC) |
| TIMREX® KS44 | Highly crystalline primary synthetic graphite | >99.5% carbon<br>BET SA: 9 m$^2$/gram (ASTM D3037)<br>Particle size:<br>    D10 (Laser Diffraction) = 4.1 $\mu$m<br>    D50 (Laser Diffraction) = 15.8 $\mu$m<br>    D90 (Laser Diffraction) = 44.8 $\mu$m |

Carbon powder (carbon black) as described in Tables 2A and 2B was included in example or comparative compositions described herein:

**Table 2A - Carbon Black Properties**

| Component | BET nitrogen SA m$^2$/gr ASTM D3037 | OAN ml/100g ASTM D2414 | Ash content % ASTM D1506 | Pour density kg/m$^3$ ASTM D1513 |
|---|---|---|---|---|
| Ensaco® 350G | 770 | 320 | 0.030 | 135 |
| Ketjenblack EC300J | 800 | 310-345 | <0.05 | 125-145 |
| Printex XE2 B | 1000 | 420 | 1.6 | |
| P-XP | 1125 | 430 | 1.6 | 115 |
| Cabot Vulcan XCmax 22 | | 320 | | 190 |
| Ensaco® 250G | 66 | 194 | 0.010 | 170 |

**Table 2B - Carbon Black Properties (cont.)**

| Component | Iodine absorption mg/g ASTM D1510 | Sulfur content % ASTM D1619 | Average primary particle size nm ASTM D1514 | Volatiles % |
|---|---|---|---|---|
| Ensaco® 350G | 860 | 0.02 | 45 | 0.2 |
| Ketjenblack EC300J | 740-840 | | 30-50 | 0.4 |
| Printex XE2 B | 1125 | < 0.8 | 30 | 1 |
| P-XP | 1230 | 0.6 | | |
| Cabot Vulcan XCmax 22 | 1360 | | | |
| Ensaco® 250G | 82 | 0.012 | 45 | 0.1 |

As shown in Tables 2A and 2B, Ensaco® 250G has properties that are different than those of the other carbon black powders used in the compositions described herein, such as Brunauer-Emmett-Teller (BET) surface area (ASTM D3037), oil absorption number (OAN) (ASTM D2414), ash content (ASTM D1506), pour density (ASTM D1513), iodine absorption (ASTM D1510), sulfur content (ASTM D1619) and percent volatiles (determined from weight loss during heating between 105 °C and 950 °C).

Additionally, the porosity of carbon particles can be neglected in the low-surface-area carbon black grades for which the BET specific surface area (SSA) scales with the primary particle size. For carbon blacks having a BET SA of above about 150 m$^2$/gram, pores in the primary particles contribute to the BET SSA. A further increase in BET SSA is provided mainly by an increasing porosity of the primary particles. SEM shows, for example, the existence of a significant number of pores in the primary particles of Ensaco® 350G, a high surface area carbon filler. In some cases, the large pores hollowed the primary particles to such an extent that these particles almost completely lose the typical spherical character.

Compositions shown in Table 3 were extruded and tested (all amounts in this and the other tables listed are in wt%):

**Table 3** - **Comparative and Example Compositions**

| Component | C1.1 | C1.2 | C1.3 | C1.4 | Ex1.1 | Ex1.2 | Ex1.3 | Ex1.4 |
|---|---|---|---|---|---|---|---|---|
| Formolene® HL5010 | 58 | 58 | 58 | 56 | 54 | 52 | 54 | 56 |
| Ketjenblack EC300J | 13 | | | | | | | |
| Ensaco® 350G | | 13 | | | | | | |
| Ensaco® 250G | | | 13 | 15 | 17 | 19 | 19 | 19 |
| TIMREX® KS44 | 29 | 29 | 29 | 29 | 29 | 29 | 27 | 25 |
| **Total**: | 100 | 100 | 100 | 100 | 100 | 100 | 100 | 100 |

Properties of the Table 3 compositions are provided in Table 4:

**Table 4 - Properties of Table 3 Compositions**

| Property | Unit | C1.1 | C1.2 | C1.3 | C1.4 | Ex1.1 | Ex1.2 | Ex1.3 | Ex1.4 |
|---|---|---|---|---|---|---|---|---|---|
| Tensile: | | | | | | | | | |
| Modulus of elasticity | MPa | 3526 | 3636 | 3144 | 3352 | 3350 | 3734 | 3558 | 3282 |
| Stress at break | MPa | 31.3 | 31.6 | 30.3 | 30 | 31.2 | 31.4 | 31 | 29.9 |
| Elongation at break | % | 7.2 | 7.7 | 12 | 10 | 10 | 7.1 | 6.9 | 7.9 |
| Flexural: | | | | | | | | | |
| Modulus | MPa | 2360 | 2340 | 2070 | 2150 | 2240 | 2590 | 2390 | 2200 |
| Stress at break | MPa | 49.1 | 48.6 | 44.2 | 45.1 | 46.4 | 49.8 | 47.9 | 46.7 |
| NII, 23 °C | J/m | 54.8 | 61.7 | 74.9 | 71.6 | 71.3 | 55.1 | 45.4 | 45.1 |
| UNII, 23 °C | J/m | 402 | 461 | 546 | 590 | 578 | 334 | 298 | 337 |
| HDT, 1.82 MPa | °C | 72.3 | 70.4 | 68.3 | 66.8 | 72.9 | 74.2 | 72 | 68.8 |
| HDT, 0.455 MPa | °C | 105 | 104 | 109 | 104 | 107 | 107 | 108 | 102 |
| Puncture impact, 23 °C | | | | | | | | | |
| Energy to max load | J | 3.3 | 3.08 | 3.36 | 3.92 | 2.84 | 4.12 | 3.18 | 3.2 |
| Energy, total | J | 7.96 | 8.54 | 10.6 | 10.7 | 10.2 | 8.44 | 8.5 | 8.58 |
| Deflection at max load | mm | 6.18 | 5.78 | 6.04 | 6.68 | 5.1 | 7.14 | 6.12 | 6.28 |
| MVR | cm$^3$/ 10 min | 0 | 0 | 5.93 | 5.4 | 4.91 | 0 | 0 | 0 |
| Specific gravity | - | 1.228 | 1.227 | 1.224 | 1.242 | 1.243 | 1.278 | 1.263 | 1.242 |
| MV, 100 1/s, 280 °C | Pa.s | 3727 | 3617 | 2580 | 2672 | 2786 | 3211 | 3213 | 2940 |
| MV, 100 1/s, 320 °C | Pa.s | 3080 | 2893 | 2062 | 2108 | 2233 | 2595 | 2529 | 2364 |
| Volume resistivity | Ohm.cm | 0.516 | 0.746 | 6.73 | 3.7 | 1.63 | 0.458 | 0.633 | 0.924 |

Tensile properties were evaluated according to ASTM D638 with an extensometer, a uniaxial tensile test, a test speed of 5 millimeters per minute (mm/min); results are provided in megapascals (MPa) or % as indicated. Flexural properties were evaluated using a 3-point flexural test in accordance with ASTM D790. Notched Izod Impact (NII) and Unnotched Izod Impact (UNII) strength were evaluated at 23 °C in accordance with ASTM D256 and ASTM D4812; results are provided in Joules per meter (J/m). Heat deflection temperature (HDT) was evaluated according to ASTM D648 at 1.82 MPa or 0.455 MPa (as indicated) using a sample thickness of 3.2 millimeters (mm); results are provided in °C. Puncture impact (multi-axial impact) was evaluated according to ASTM D3763 using a Global Test Method at a temperature of 23 °C, velocity of 3.3 meters per second (m/s) and a sample thickness of 3.2 mm; results are provided in Joules or mm as indicated. Specific gravity was evaluated in accordance with ASTM D792. Melt volume flow rate (MVR) was evaluated in accordance with ASTM D1238 using a Global Test Method at a temperature of 280 °C, a load of 21.6 kilogram (kg) and a dwell time of 390 seconds(s). Capillary melt viscosity (MV) was evaluated using a GEP multi-point method and Kayeness viscometer at the indicated temperature; MV at a shear rate of 100 reciprocal seconds (100 1/s) is reported in Pascal-seconds (Pa.s). Volume resistivity was evaluated according to ASTM D991 using plaques having a length x width of 4 inch x 5 inch and a thickness of 1/8 inch; results are provided in Ohm-centimeters (Ohm.cm).

As Table 4 shows, different amounts of carbon black powder were used to balance the impact strength, flow/processability and volume electrical resistivity of the compositions with the same amount of graphite (see C1.1-C1.4, Ex1.1 and Ex1.2). Ensaco® 250G, having physical properties that differed from those of the other carbon blacks investigated, required the highest amount of carbon powder of the series to balance these properties. As further demonstrated, the example compositions Ex1.1-Ex1.4 including greater than 15 wt% of the Ensaco® 250G carbon powder have a better balance of IZOD impact strength, flow/processability and volume electrical resistivity compared with the other compositions, especially when compared with composition C1.1 which includes 13 wt% of Ketjenblack EC300J.

Additional comparative and example compositions were prepared as shown in Table 5:

**Table 5 - Comparative and Example Compositions**

| Component | C2.1 | C2.2 | C2.3 | C2.4 | C2.5 | Ex2.1 |
|---|---|---|---|---|---|---|
| Formolene® HL5010 | 58 | 58 | 59 | 58 | 60 | 53 |
| Ketjenblack EC300J | 13 | | | | | |
| Ensaco® 350G | | 13 | | | | |
| Printex XE2 B | | | 12 | | | |
| Cabot Vulcan XCmax 22 | | | | 13 | | |
| P-XP | | | | | 11 | |
| Ensaco® 250G | | | | | | 18 |
| TIMREX® KS44 | 29 | 29 | 29 | 29 | 29 | 29 |
| **Total:** | 100 | 100 | 100 | 100 | 100 | 100 |

Certain properties of the Table 5 compositions were evaluated and are provided in Table 6:

**Table 6 - Properties of Table 5 Compositions**

| Property | Unit | C2.1 | C2.2 | C2.3 | C2.4 | C2.5 | Ex2.1 |
|---|---|---|---|---|---|---|---|
| Tensile: | | | | | | | |
| Modulus of elasticity | MPa | 3780 | 3504 | 2860 | 2724 | 2616 | 2914 |
| Stress at break | MPa | 33.7 | 34.4 | 31.6 | 28.1 | 30.8 | 30.7 |
| Elongation at break | % | 5.7 | 7.3 | 9.4 | 14 | 13 | 12 |
| Flexural: | | | | | | | |
| Modulus | MPa | 2890 | 2450 | 1940 | 1760 | 1730 | 1890 |
| Stress at break | MPa | 51.9 | 49.7 | 47 | 44.8 | 44.4 | 44.5 |
| NII, 23 °C | J/m | 44.8 | 51.5 | 47.8 | 79.8 | 55 | 63.2 |
| UNII, 23 °C | J/m | 228 | 342 | 368 | 860 | 542 | 587 |
| HDT, 1.82 MPa | °C | 78.8 | 74.8 | 73.3 | 66.5 | 66.9 | 67 |
| HDT, 0.455 MPa | °C | 108 | 104 | 101 | 94.2 | 99.8 | 101 |
| Specific gravity | - | 1.269 | 1.232 | 1.159 | 1.14 | 1.135 | 1.198 |
| MVR | cm$^3$/ 10 min | 0 | 0 | 0 | 0 | 0 | 0 |
| MV, 100 1/s, 280 °C | Pa.s | 4017 | 3569 | 3823 | 3305 | 3750 | 2880 |
| MV, 100 1/s, 320 °C | Pa.s | 3201 | 2797 | 3142 | 2675 | 3103 | 2294 |

(continued)

| Property | Unit | C2.1 | C2.2 | C2.3 | C2.4 | C2.5 | Ex2.1 |
|---|---|---|---|---|---|---|---|
| Volume resistivity | Ohm.cm | 0.425 | 0.552 | 1.07 | 1.16 | 1.16 | 1.19 |

The properties were evaluated using the standards set forth above. As the data in Table 6 shows, example composition Ex2.1 including the Ensaco® 250G carbon powder has a better balance of IZOD impact strength, flow/processability and volume electrical resistivity compared with comparative compositions C2.1-C2.5, especially when compared with comparative composition C2.1 including 13wt% of Ketjenblack EC-300J.

In particular, compositions according to aspects of the disclosure had a volume electrical resistivity of at most 1.65 Ohm.cm and a capillary melt viscosity (MV) at 280 °C and 100 1/sec of at most 3300 Pa.s.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:

   from about 35 wt% to about 70 wt% of at least one polyethylene polymer;
   from about 25 wt% to about 45 wt% of at least one graphite filler; and
   from greater than 15 wt% to about 25 wt% of at least one carbon powder filler having a BET surface area of at most 600 square meters per gram ($m^2/g$) as determined in accordance with ASTM D3037, an oil absorption number (OAN) of at most 300 ml/100g as determined in accordance with ASTM D2414, and an iodine absorption of at most 600 mg/g as determined in accordance with ASTM D1510,
   wherein the composition has a volume electrical resistivity of at most 1.65 ohm.centimeter (ohm.cm) as determined in accordance with ASTM D991,
   wherein the composition has a capillary melt viscosity of at most 3300 Pascal-seconds (Pa.s) at a temperature of 280 °C and a shear rate of 100 reciprocal seconds (1/s) as evaluated using a GEP multi-point method and Kayeness viscometer, and
   wherein the combined weight percent value of all components does not exceed 100 wt%, and all weight percent values are based on the total weight of the composition.

2. The thermoplastic composition according to claim 1, wherein the polyethylene polymer has a density of at least 0.92 gram per cubic centimeter ($g/cm^3$) as determined in accordance with ASTM D1505 and a melt flow rate (MFR) of at least 5 grams per 10 minutes (g/10min) as measured at 190 °C and 21.6 kilogram (kg) in accordance with ASTM D1238.

3. The thermoplastic composition according to claims 1 or 2, wherein the polyethylene polymer has a degree of crystallinity of at least 48% as determined by differential scanning calorimetry (DSC).

4. The thermoplastic composition according to claim 3, wherein the composition has improved chemical resistance against zinc bromide corrosion as compared to a comparative composition that includes a polyethylene polymer having a degree of crystallinity of less than 48% instead of the polyethylene polymer having a degree of crystallinity of at least 48%.

5. The thermoplastic composition according to any of claims 1 to 4, wherein the graphite filler has a D50 particle size of at

least 5 micron (μm) as determined by laser diffraction and a BET surface area of at least 5 square meters per gram (m²/g) as determined in accordance with ASTM D3037.

6. The thermoplastic composition according to any of claims 1 to 5, wherein the composition comprises from about 16 wt% to about 22 wt% of the at least one carbon powder filler.

7. The thermoplastic composition according to any of claims to 1 to 6, wherein the composition does not comprise a polymer component other than the at least one polyethylene polymer.

8. The thermoplastic composition according to any of claims 1 to 7, wherein the composition does not comprise polypropylene or a styrenated copolymer.

9. The thermoplastic composition according to any of claims 1 to 8, wherein the composition comprises at least one additional additive, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

10. The thermoplastic composition according to any of claims 1 to 9, wherein the at least one carbon powder filler has a BET surface area of from 25 to 100 m²/g as determined in accordance with ASTM D3037.

11. The thermoplastic composition according to any of claims 1 to 10, wherein the composition has a capillary melt viscosity of at most 2600 Pa.s at a temperature of 320 °C and a shear rate of 100 1/s as evaluated using a GEP multi-point method and Kayeness viscometer.

12. The thermoplastic composition according to any of claims 1 to 11, wherein the composition has a tensile modulus of elasticity of at least 2900 MPa as evaluated according to ASTM D638 with an extensometer, a uniaxial tensile test, and a test speed of 5 millimeters per minute (mm/min).

13. The thermoplastic composition according to any of claims 1 to 12, wherein the composition has a flexural modulus of at least 1800 MPa as evaluated using a 3-point flexural test in accordance with ASTM D790.

14. An article comprising the thermoplastic composition according to any of claims 1 to 13, wherein the article is a battery electrode plate.

15. The article according to claim 14, wherein the battery electrode plate has a thickness of 1 millimeter (mm) or less.

**FIG. 1**

EP 4 663 694 A1

FIG. 2

FIG. 3

**Capillary Melt Viscosity at 100 1/s**

FIG. 4

**FIG. 5**

EP 4 663 694 A1

**EUROPEAN SEARCH REPORT**

| Application Number |
| --- |
| EP 24 18 1325 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X,D | WO 2022/195511 A1 (SHPP GLOBAL TECH BV [NL]) 22 September 2022 (2022-09-22) <br> * paragraph [0012] - paragraph [0014] * <br> * examples 5-7; tables 1,4A,4B * <br> * claims * <br> ----- | 1-15 | INV. <br> C08K3/04 <br> C08L23/08 |
| A | EP 0 190 772 A2 (MEIDENSHA ELECTRIC MFG CO LTD [JP]) 13 August 1986 (1986-08-13) <br> * examples 1,3,8; tables 2,3,7,8 * <br> * claims 1-3 * <br> * figures 2,4 * <br> ----- | 1-15 | |
| A | WO 2023/078773 A1 (IMERTECH SAS [FR]) 11 May 2023 (2023-05-11) <br> * examples * <br> * claims * <br> ----- | 1-15 | |

| TECHNICAL FIELDS SEARCHED (IPC) |
| --- |
| C08K |

The present search report has been drawn up for all claims

| Place of search | Date of completion of the search | Examiner |
| --- | --- | --- |
| Munich | 21 November 2024 | Russell, Graham |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 18 1325

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2024

| Patent document cited in search report | | Publication date | Patent family member(s) | | Publication date |
|---|---|---|---|---|---|
| WO 2022195511 | A1 | 22-09-2022 | CN | 117222701 A | 12-12-2023 |
| | | | EP | 4308639 A1 | 24-01-2024 |
| | | | JP | 2024510003 A | 05-03-2024 |
| | | | KR | 20230159514 A | 21-11-2023 |
| | | | US | 2024158604 A1 | 16-05-2024 |
| | | | WO | 2022195511 A1 | 22-09-2022 |
| EP 0190772 | A2 | 13-08-1986 | EP | 0109824 A1 | 30-05-1984 |
| | | | EP | 0190772 A2 | 13-08-1986 |
| WO 2023078773 | A1 | 11-05-2023 | CN | 118234787 A | 21-06-2024 |
| | | | EP | 4426777 A1 | 11-09-2024 |
| | | | JP | 2024541271 A | 08-11-2024 |
| | | | KR | 20240101807 A | 02-07-2024 |
| | | | WO | 2023078773 A1 | 11-05-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4169816 A
- US 5173362 A

- WO 2022195511 A